# EUROPEAN PATENT APPLICATION

(11) **EP 1 973 224 A2**
(43) Date of publication of application: **24.09.2008**
(21) Application number: 08003580.1
(22) Date of filing: 27.02.2008
(51) Int. Cl.: H02M 7/04

(54) **Plasma television set and power supply circuit**

(30) Priority: 06.03.2007 JP 2007056355
(71) Applicant: Funai Electric Co., Ltd., Daito-shi, Osaka 574-0013 (JP)
(72) Inventor: Ogawa, Takahiro, Daito-shi Osaka 574-0013 (JP)
(74) Representative: Grünecker, Kinkeldey, Stockmair & Schwanhäusser Anwaltssozietät

(57) **Abstract**

A plasma television set includes a detection disabling circuit including a dividing resistance having one of two ends to which a constant voltage is supplied from an outside of the sustain voltage generation circuit and the other end which is grounded, the dividing resistance having a dividing point, and a diode having an anode connected to the dividing point of the second dividing resistance and a cathode connected to a dividing point of another dividing resistance, and a substitute voltage stop circuit including a resistance to which the predetermined starting voltage is supplied, an electrolytic capacitor having a positive electrode connected to the resistance and a negative electrode grounded, and a transistor having a base connected to the positive electrode of the electrolytic capacitor, an emitter grounded and a collector connected to the dividing point of the second dividing resistance.

## Description

### Technical Field to which the Invention Belongs

The present invention relates to a plasma television set and a power supply circuit therefor.

### Related Background Art

A power supply circuit is generally provided with a protecting circuit for maintaining a power supply voltage within a predetermined range so that the power supply voltage is prevented from an abnormal condition. For example, an output voltage of the power supply circuit is monitored by a microcomputer. The microcomputer resets a power supply circuit when output voltage is out of a predetermined range.

JP-A-H06-150029 discloses one of power supply circuits provided with the respective protecting circuits of the above-described type. In the document, a power supply monitor circuit compares power supply voltage with a plurality of reference voltages Hₜₕ and Lₜₕ (Hₜₕ>Lₜₕ). Based on a result of comparison, a sequential circuit determines whether the power supply voltage V is in a first state (V>Hₜₕ), a second state (V<Hₜₕ) or a third state (V<Lₜₕ). A reset signal output circuit supplies a reset signal to a microcomputer according to a period of the state.

However, the power supply circuits include a type in which a resonance control IC is provided for controlling resonance of a primary side. The power supply circuit provided with the resonance control IC requires some time between start of power supply to the power supply circuit and start of oscillation of the resonance control IC at a desired level. The microcomputer starts in this period depending upon a startup timing thereof, thereby initiating monitor of the power supply voltage. As a result, the microcomputer determines that the power supply voltage is in an abnormal condition, resetting the power supply circuit. Accordingly, the power supply circuit does not start.

### Disclosure of the Invention

The present invention provides a power supply circuit which can be prevented from being reset on the basis of determination of power malfunction until an output voltage rises to or above a predetermined voltage even though the power supply circuit requires substantial time to start oscillation at sufficient voltage after start of voltage supply, and a plasma television set provided with the power supply circuit.

A power supply circuit of the present invention starts oscillation at a primary side when a predetermined starting voltage is supplied thereto, and necessitates a predetermined time period starting from start of the oscillation until an output voltage at a secondary side rises to or above a predetermined voltage. The power supply circuit comprises a detection unit which detects as to whether an output voltage of the power supply circuit is at to above the predetermined voltage, a power supply reset unit which resets the power supply circuit when the detection unit has detected voltage lower than the predetermined voltage, a detection disabling circuit which is supplied with a constant voltage from outside the power supply circuit and generates a substitute voltage from the constant voltage so that the detection unit detects the output voltage higher than the predetermined voltage, delivering to the detection unit the substitute voltage as voltage indicative of the output voltage, and a substitute voltage stop circuit which stops delivery of the substitute voltage from the detection disabling circuit after at least elapse of the predetermined time period from start of input of the predetermined starting voltage.
The detection unit obtains an output voltage of the power supply circuit and detects by determining whether the output voltage is at or above the predetermined voltage. The power supply reset unit resets the power supply circuit when the detection unit has detected voltage lower than the predetermined voltage. The constant voltage is supplied from outside the power supply circuit to the detection disabling circuit. The substitute voltage is generated from the constant voltage, and the detection unit detectably delivers the substitute voltage. When detecting the substitute voltage, the detection unit detects the output voltage higher than the predetermined voltage. The substitute voltage stop circuit stops output of the substitute voltage from the detection disabling circuit after elapse of at least the predetermined time period from start of input of the predetermined starting voltage to the power supply circuit. The predetermined time period is equal to a time period starting from start of the oscillation until an output voltage at a secondary side rises to or above a predetermined voltage and means at least elapse of the predetermined time period or longer.
According to the present invention as described above, the power supply circuit can be prevented from being reset as power malfunction until the output voltage rises to or above the predetermined voltage even though the power supply circuit necessitates substantial time before start of oscillation of the output voltage to or above the predetermined voltage.

As a more concrete composition example, a plasma television set which is provided with a sustain voltage generation circuit starting oscillation at a primary side when a predetermined starting voltage is supplied thereto, and necessitating a predetermined time period starting from start of the oscillation until an output voltage at a secondary side rises to or above a predetermined voltage, the plasma television set displaying an image on a screen based on an image signal supplied thereto, comprises a rectifier circuit supplied with an AC voltage and generating a DC voltage; a relay circuit provided at a stage previous to the rectifier circuit and switching between supply and cutoff of the AC voltage to and from the rectifier circuit thereby to turn on and off a main power supply; an address voltage generation circuit incorporated with a first transformer having a primary winding to which the DC voltage is applied and a secondary winding in which an address voltage is generated and supplied to a plasma display panel; the sustain voltage generation circuit being incorporated with a second transformer having a primary winding to which the DC voltage is applied and a secondary winding having lines which have different unwinding locations and from which a sustain voltage and a check voltage both having different voltage levels are delivered to the plasma display panel respectively; a standby voltage generation circuit being incorporated with a third transformer having a primary winding to which the DC voltage is applied and a secondary winding having lines which have different unwinding locations and from which a first erasing voltage, a second erasing voltage and a scan voltage all having different voltage levels are delivered to the plasma display panel respectively; a detection circuit having a first dividing resistance having an end to which the check voltage is applied and the other end which is grounded, the first dividing resistance having a dividing point; a microcomputer to which voltage at the dividing point of the first dividing resistance is applied and which determines that the sustain voltage has an anomalous value, when the supplied voltage is lower than a predetermined value, thereby switching the relay circuit off; a detection disabling circuit including a second dividing resistance having one of two ends to which a constant voltage is applied from an outside of the sustain voltage generation circuit and the other end which is grounded, the second dividing resistance having a dividing point, and a diode having an anode connected to the dividing point of the second dividing resistance and a cathode connected to the dividing point of the first dividing resistance; and a substitute voltage stop circuit including a resistance to which the predetermined starting voltage is applied, an electrolytic capacitor having a positive electrode connected to the resistance and a negative electrode grounded, and a transistor having a base connected to the positive electrode of the electrolytic capacitor, an emitter grounded and a collector connected to the dividing point of the second dividing resistance. In the plasma television set, the electrolytic capacitor has a time constant determined according to a startup time each output voltage of the sustain voltage generation circuit necessitates to rise to a predetermined normal voltage upon start of supply of the predetermined starting voltage, the electrolytic capacitor having an interterminal voltage which exceeds the voltage turning on the transistor upon elapse of the starting time.
The detection disabling circuit supplies voltage at the dividing point of the second dividing resistance instead of voltage at the dividing point of the first dividing resistance until the voltage of the electrolytic capacitor exceeds the predetermined value upon start of supply of the predetermined starting voltage. The substitute voltage stop circuit turns on the transistor to ground the dividing point of the second dividing resistance when the voltage of the electrolytic capacitor has exceeded the predetermined value, whereby the substitute voltage supplied to the detection disabling circuit is stopped and the voltage at the dividing point of the first dividing resistance is supplied to the microcomputer. Upon stop of supply of the predetermined starting voltage, the diode is caused to discharge by use of a higher time constant than during charge of the electrolytic capacitor, thereby returning the detection disabling circuit and the substitute voltage stop circuit to respective states prior to start of supply of the predetermined starting voltage.
These and other features, aspects, and advantages of the invention will be apparent to those skilled in the art from the following detailed description of preferred non-limiting exemplary embodiments, taken together with the drawings and the claims that follow.

### Brief Description of the Drawings

It is to be understood that the drawings are to be used for the purposes of exemplary illustration only and not as a definition of the limits of the invention. Throughout the disclosure, the word "exemplary" is used exclusively to mean "serving as an example, instance, or illustration." Any embodiment described as "exemplary" is not necessarily to be construed as preferred or advantageous over other embodiments.
Referring to the drawings in which like reference character(s) present corresponding parts throughout:
FIG 1 is a schematic block diagram showing a schematic electrical arrangement of a plasma television set provided with a power supply circuit in accordance with the present invention;
FIG 2 is a block diagram showing the power supply circuit, a microcomputer controlling the power supply circuit, and the like;
FIG 3 is an electrical circuit diagram showing a Vₛᵤₛ generation circuit;
FIG 4 is timing chart of the Vₛᵤₛ generation circuit; and
FIG 5 is a block diagram showing the power supply circuit.

### Description of Special Embodiments

One embodiment of the present invention will be described in the following order:
(1) Outline arrangement of plasma television set;
(2) Arrangement of power supply circuit etc.;
(3) Sustain voltage generation circuit;
(4) Detection disabling circuit; and
(5) Summary
The detailed description set forth below in connection with the appended drawings is intended as a description of presently preferred embodiments of the invention and is not intended to represent the only forms in which the present invention may be constructed and or utilized.

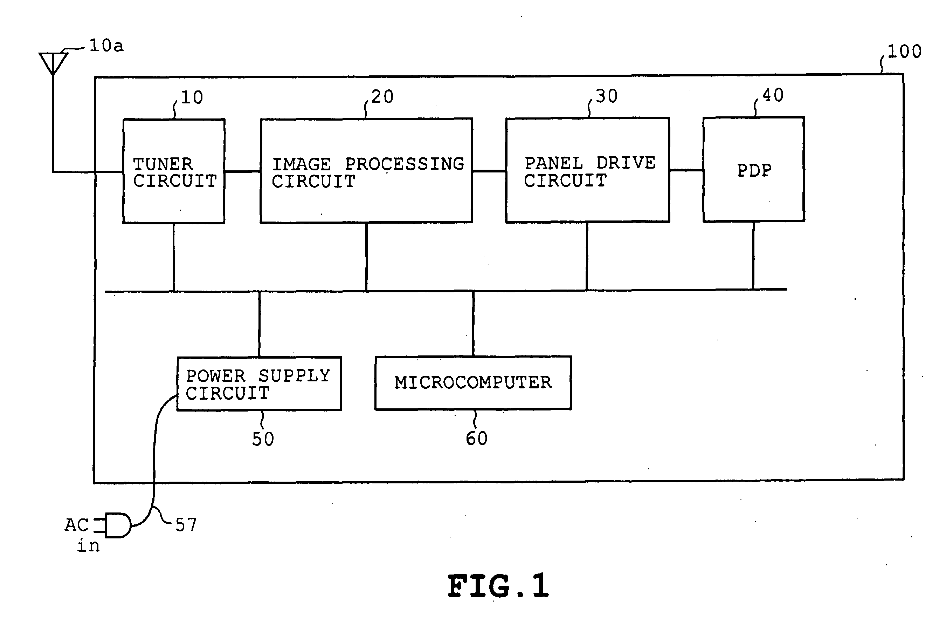

(1) Outline arrangement of plasma television set
One embodiment of the present invention will be described with reference to the accompanying drawings. FIG 1 is a block diagram showing an outline arrangement of a plasma television set provided with a power supply circuit in accordance with the present invention.

In FIG 1, a plasma television set 100 roughly comprises a plasma display panel (hereinafter, "PDP") 40, an image processing circuit 20, a tuner circuit 10, a microcomputer 60, a panel drive circuit 30, and a power supply circuit 50. The tuner circuit 10 receives television broadcasting signals via an antenna 10a, extracting picture or video signals and audio signals as intermediate frequency signals from television broadcasting signals in a predetermined frequency band. The microcomputer 60 is incorporated with a central processing unit (CPU), a read only memory (ROM) and a random access memory (RAM) all constituting a runtime environment for programs thereby to control the entire plasma television set 100.

The video processing circuit 20 digitizes image signals based on the image signals supplied from the tuner circuit 10 and further applies, to the digitized image signals, image signal processing such as color management, noise reduction, edge enhancement, image quality adjustment, gamma correction, panel timing, gain adjustment, balance adjustment and the like. A digital video signal delivered from the video processing circuit 20 is supplied to the panel drive circuit 30 which generates a drive signal of PDP 40 to display an image on a screen of the PDP 40 based on the drive signal.

A commercial AC voltage AC is supplied via a power supply cable 57 into the power supply circuit 50. The power supply circuit 50 generates a power supply voltage for driving the PDP 40 from the supplied AC voltage. More specifically, the power supply circuit 50 generates a sustain voltage Vₛᵤₛ, an address voltage V_{add}, a first erasing voltage Vₛₑₜ, a second erasing voltage Vₑ and a scan voltage V_{scan} as the power supply voltage, all of which are supplied to the PDP 40. Furthermore, the power supply circuit 50 supplies necessary power to each circuit constituting the plasma television set 100 including the microcomputer 60, other than the PDP 40.

The sustain voltage Vₛᵤₛ and the address voltage V_{add} are supplied to sustaining electrodes and address electrodes in a number of cells provided in the PDP 40 respectively. The scan voltage V_{scan} is supplied to scanning electrodes of the cells of the PDP 40. In the embodiment, the PDP 40 employs a surface discharge system that a pulse voltage is applied between the scanning electrodes and the sustaining electrodes in each of the cells which have carried out preliminary discharge by the respective address electrodes, thereby causing electrical discharge in a direction of display surface of the PDP 40. Furthermore, the first erasing voltage Vₛₑₜ and the second erasing voltage Vₑ power supplies are used to erase electrical charge remaining in the cells. The aforesaid power supply voltages are delivered to the PDP 40 in a predetermined order at a specified time when the plasma television set 100 starts.

The above-described arrangement can realize video reproduction based on television waves. Not only television waves received by the antenna 10a but also television waves supplied from a cable television (CATV) line may be reproduced. Moreover, video signals supplied from external equipment such as a digital versatile disc (DVD) video deck or the like may be reproduced. The television waves supplied into the tuner circuit 10 may be of the digital type or the analog type.

(2) Arrangement of power supply circuit etc.

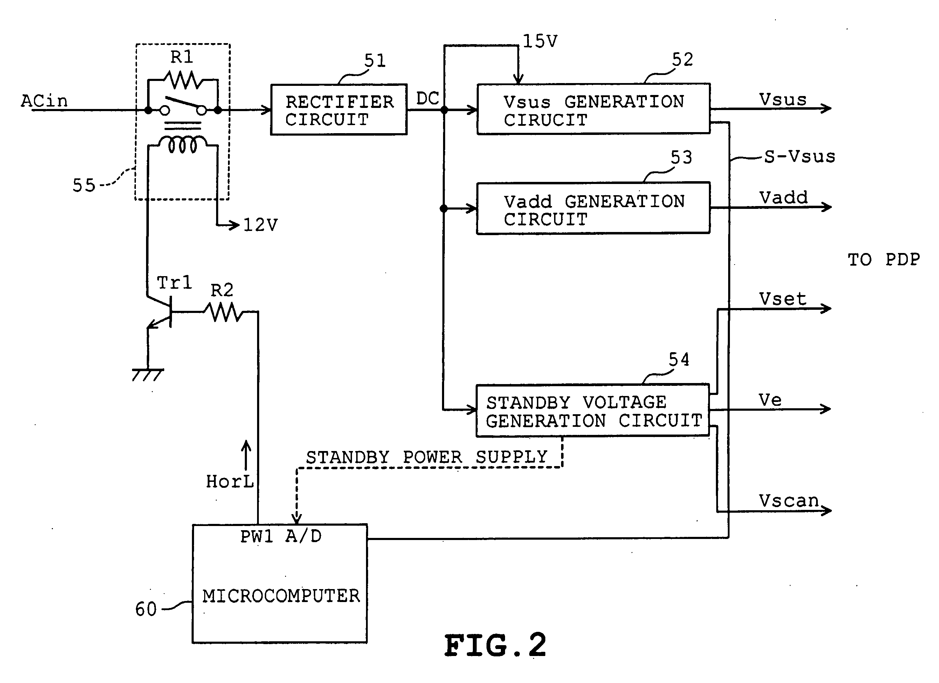

FIG 2 shows in the form of a block diagram the power supply circuit 50, the microcomputer 60 controlling the power supply circuit 50 and the like. The power supply circuit 50 includes the rectifier circuit 51 which converts the supplied AC voltage AC to the DC voltage DC with a predetermined level. The DC voltage DC is delivered to the sustain voltage generation circuit (Vₛᵤₛ generation circuit) 52, the address voltage generation circuit (V_{add} generation circuit) 53 and the standby voltage generation circuit (V_{sby} generation circuit) 54 in a parallel manner. The voltage generation circuits 52 to 54 are provided with respective transformers with specified winding ratios. When a DC voltage DC is supplied to each primary winding, a secondary winding delivers the sustain voltage Vₛᵤₛ, the address voltage V_{add}, the first erasing voltage Vₛₑₜ, the second erasing voltage Vₑ and the scan voltage V_{scan} each of which has a desired voltage level.

Each voltage generation circuit 52-54 delivers a check voltage S-Vₛₐₘₚ obtained by adjusting voltage delivered from the secondary side to a predetermined percentage (2.5 V, for example). When the voltages Vₛᵤₛ, V_{add}, Vₛₑₜ, Vₑ and V_{sca} are stable, the check voltages S-Vₛₐₘₚ corresponding to the respective aforesaid voltages are also stable. On the contrary, the check voltages S-Vₛₐₘₚ are unstable when the aforesaid voltages are unstable.

More specifically, since the voltages Vₛᵤₛ, V_{add}, Vₛₑₜ, Vₑ and V_{sca} and the check voltages S-Vₛₐₘₚ are delivered from the same transformers, variations in the voltages correspond to variations in the check voltages respectively. Accordingly, the stability of voltages Vₛᵤₛ, V_{add}, Vₛₑₜ, Vₑ and V_{sca} can be determined by determination of values of the check voltages S-Vₛₐₘₚ. The check voltages S-Vₛₐₘₚ are delivered to the microcomputer 60. Based on the check voltages S-Vₛₐₘₚ, the microcomputer 60 determines whether the voltages are normal.

The microcomputer 60 is provided with an analog/digital (A/D) input port for input of the S-Vₛₐₘₚ. In the embodiment, the check voltage S-Vₛᵤₛ of the Vₛᵤₛ generation circuit 52 is analog-to-digital converted and then supplied to the A/D input port of the microcomputer 60 as the check voltage S-Vₛₐₘₚ.
When the voltage ranging from 1.5 to 3.5 V is supplied to the A/D input port, the microcomputer 60 determines that the voltage is normal, continuing to deliver a high (H) switch signal from a port PW1 connected to a relay circuit 55, whereby the connected state of the relay circuit 55 is continued. On the other hand, when voltage supplied to the A/D input port is out of the range from 1.5 to 3.5 V, a low (L) switch signal is delivered from the port PW1 so that the relay circuit 55 is cut off.

More specifically, the relay circuit 55 turns on or off the whole power supply circuit 50 according to the supplied switch signal. In other words, the microcomputer 60 delivers a switch signal from the port PW1, thereby on-off controlling the relay circuit 55, whereby supply of main power supply to the power supply circuit 50 is turned on and off.

The relay circuit 55 comprises, for example, a switching transistor Tr1 for driving a relay coil. The switching transistor Tr1 is disposed between the microcomputer 60 and the relay circuit 55. The relay circuit 55 is arranged so that a switching signal is supplied to the transistor Tr1. When the switching signal is at the high (H) level, a switch of the relay circuit 55 is turned on such that supply of main power is executed. When the switching signal is turned to the low (L) level, the switch of the relay circuit 55 is turned off such that supply of main power is cut off.

Of course, aside from the aforesaid switch, the relay circuit 55 may be arranged so that the input and output sides of the power supply are connected via a resistance R1 to each other. In this arrangement, even when the switch is turned off, a standby power supply voltage with a predetermined level is supplied to the microcomputer 60. The standby power supply voltage is supplied via the V_{sby} generation circuit 54 to the microcomputer 60.

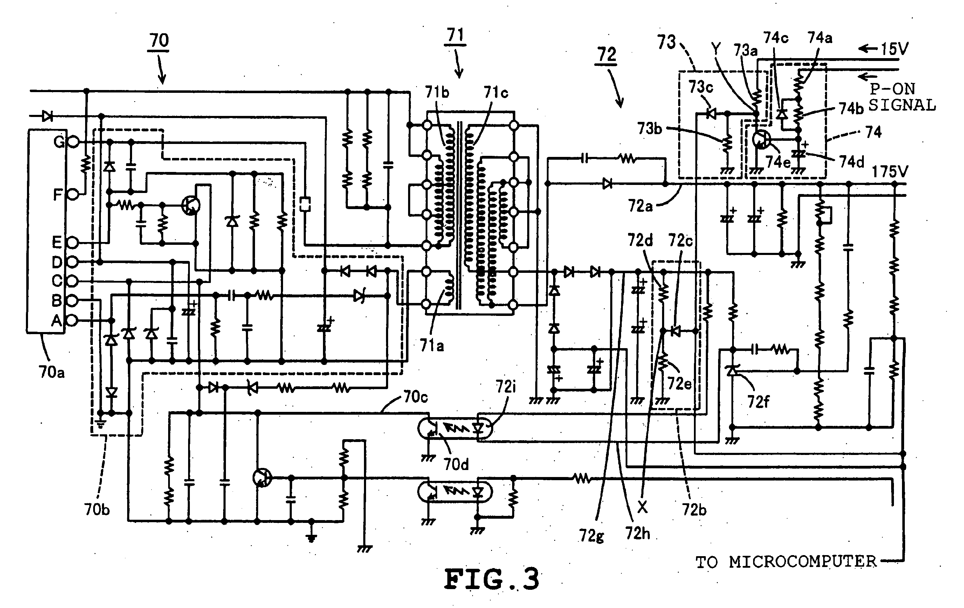

(3) Sustain voltage generation circuit
The Vₛᵤₛ generation circuit 52 will be exemplified as the power supply circuit 50 provided with a protecting circuit. The Vₛᵤₛ generation circuit 52 is a partial resonance power supply circuit provided with a partial resonance control element. FIG 3 is a circuit diagram showing the Vₛᵤₛ generation circuit 52.

The Vₛᵤₛ generation circuit 52 includes a primary side 72 to which voltage is supplied from the rectifier circuit 51 and which supplies the voltage to the transformer 71 at a suitable time. The Vₛᵤₛ generation circuit 52 further includes a secondary side 72 which delivers a sustain voltage adjusted to a desired voltage via the transformer 71. The sustain voltage delivered from the Vₛᵤₛ generation circuit 52 is supplied to the PDP.

The primary side 70 includes a control IC 70a PWM-controlling the voltage of the primary side 70, a resonance circuit 70b which resonates according to control of the control IC 70a, and a primary side feedback circuit 70c which feeds the voltage of the secondary side 72 back to the control IC 70a.

The control IC 70a includes a zero current detecting terminal A serving as a trigger input terminal to which a trigger voltage is supplied from the resonance circuit 70b, a GND terminal B to which ground voltage is supplied, a feedback terminal C to which a feedback signal is supplied via the primary feedback circuit 70c, a V_{cc} terminal D to which power is supplied from the control winding 71a, and a Vᵢₙ terminal F to which voltage obtained by rectifying AC is directly supplied so that current is supplied to V_{cc} only during the startup and so that the Vᵢₙ terminal F is automatically cut off after startup.
When DC voltage DC from the rectifier circuit 51 is supplied to the control IC 71 a, voltage is applied to the Vᵢₙ terminal F, whereupon buildup of electric charge is initiated in a startup circuit in the control IC 70a. Since current supplied from the Vin terminal F to the startup circuit in the control IC 70a is in the microampere level, the buildup of electric charge necessitates substantial time, which time is defined as delay. V_{cc} is oscillated based on voltage supplied thereto from the Vᵢₙ until the electric charge of the starting circuit reaches a predetermined amount. V_{cc} is oscillated only by power supply from the control winding 71a when the electric charge of the starting circuit has reached the predetermined amount. Simultaneously, input from the Vᵢₙ terminal F is automatically cut off such that supply of electric charge from the Vin terminal F is stopped.

Furthermore, based on the feedback signal supplied to the feedback terminal C, the control IC executes PWM control for the oscillation circuit 70b so that the output voltage of the secondary side is adjusted so as to become a proper voltage.
Additionally, a drive voltage is delivered from the collector terminal G to the primary main winding of the transformer.

Furthermore, the control IC supplies the voltage of the control winding of the transformer via the oscillation circuit to the zero current detecting terminal A, thereby detecting the zero current point at the secondary side and determining an ON timing of the main switching element which switches output from the collector terminal G

The primary feedback circuit 70c includes a feedback terminal C of the control IC 70a grounded via a phototransistor 70d constituting a photocoupler. The phototransistor 70d is turned on when receiving light with a predetermined duration from a light-emitting diode i provided in a secondary feedback circuit 72h which will be described later, thereby supplying a feedback signal to the feedback terminal C.

The secondary side 72 comprises the secondary feedback circuit 72h delivering feedback to the primary feedback circuit 70c according to output voltage, an output line 72a delivering voltage of about 175 V as a sustain voltage from a necessary number of winding turns, a detector circuit 72b which drops voltage at the secondary side 72 to a predetermined voltage and supplies the predetermined voltage as a check voltage S-Vₛᵤₛ to the A/D terminal of the microcomputer 60, and a voltage monitor line 72g delivering voltage from an unwinding location and number of winding turns both different from those of the output line 72a. The secondary feedback circuit 72h and the detector circuit 72b are connected to the voltage monitor line 72g.

The secondary feedback circuit 72h roughly comprises a photodiode 72i which is combined with the phototransistor 70d thereby to constitute a photocoupler, and a three-terminal regulator 72f. The photodiode 72i has an anode connected via a resistance to the voltage monitor line 72g. The three-terminal regulator 72f has an input terminal connected to a cathode of the photodiode 72i, a capacitor having input and output terminals connected in series to each other, and a resistance. The three-terminal regulator 72f further has a ground terminal which is grounded.

When voltage of the voltage monitor line 72g rises, the three-terminal regulator 72f breaks down such that current flows from an input terminal toward the ground terminal. Current also flows into the photodiode 72i, which emits light. The emitted light is received by the phototransistor 70d, whereupon current flows between the collector and the emitter.

The detector circuit 72b includes dividing resistances 72d and 72e each of which has one of two ends connected to the voltage monitor line 72g and the other end grounded, and a diode 72c having a cathode connected to a dividing point X of the dividing resistances 72d and 72e and an anode connected to the A/D terminal of the microcomputer 60. Voltage on the voltage monitor line 72g is divided by the dividing resistances 72d and 72e such that the voltage at the dividing point X is delivered as the check voltage S-Vₛᵤₛ to the A/D terminal of the microcomputer 60.

When the check voltage S-Vₛᵤₛ is lower than a predetermined voltage, the A/D terminal of the microcomputer 60 detects the voltage, determining that the voltage has an anomalous value. In this case, the microcomputer 60 delivers a low-level signal L to the relay circuit 55. Accordingly, the relay circuit 55 is turned off such that the power supply circuit 50 is stopped. On the other hand, when the check voltage S-Vₛᵤₛ is higher than the predetermined voltage, the A/D terminal of the microcomputer 60 detects the voltage, determining that the voltage has a normal value. In this case, the microcomputer 60 keeps delivering a high-level signal H. Accordingly, since the relay circuit 55 maintains the ON state, the power supply circuit 50 is not stopped. The resistance values of the dividing resistances 72d and 72e are set so that the voltage at the diving point X ranges from 1.5 to 3.5 V (a center value of 2.5 V). The voltage at the dividing point X can be changed according to specifications of the microcomputer 60.

As described above, when supplied with the voltage at the dividing point X, the microcomputer 60 detects the voltage. Thus, the microcomputer 60 constitutes a detection unit. When determining that check voltage S-Vₛᵤₛ is abnormal, the microcomputer 60 delivers the low-level signal L to the relay circuit so that the power supply circuit 50 is stopped or reset. Thus, the microcomputer 60 constitutes a power supply reset unit.

(4) Detection disabling circuit
The control IC 70a takes a predetermined time until starting oscillation. As described above, however, when detecting the voltage lower than the predetermined voltage via the detection unit, the microcomputer 60 stops the power supply circuit 50. Accordingly, there is a possibility that the microcomputer 60 may detect a voltage lower than the predetermined voltage until the control IC 70a starts oscillation, depending upon the startup timing of the microcomputer 60. In this case, the power supply circuit 50 would be stopped and would not start.

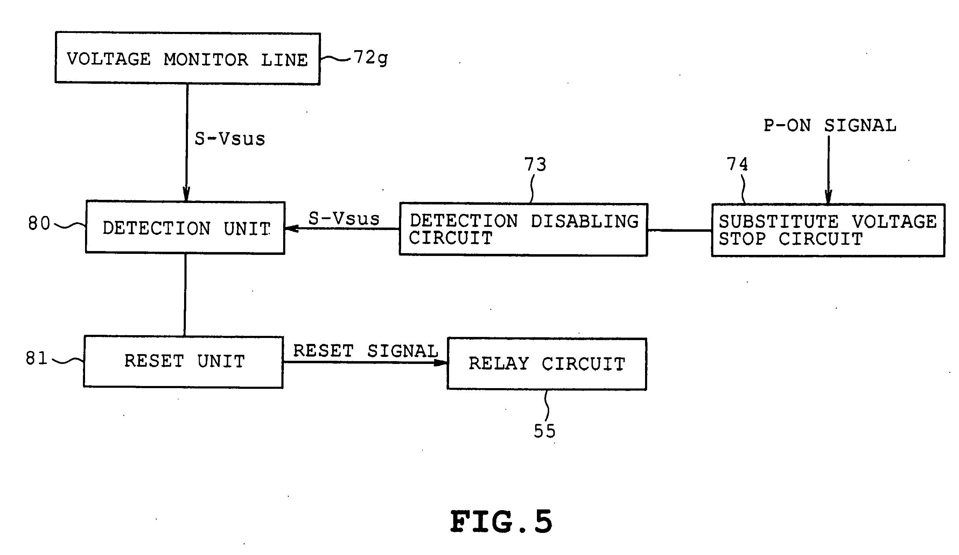

In view of the foregoing, a detection disabling circuit 73 and a substitute voltage stop circuit 74 are provided as shown in FIG 5. These circuits prevent the power supply circuit 50 from stopping until the control IC 70a starts up while enabling voltage monitor of the microcomputer 60 after startup of the power supply circuit 50. The detection disabling circuit 73 is supplied with a constant voltage (15V) from a predetermined 15 V line provided outside the Vₛᵤₛ generation circuit 52, thereby being capable of supplying a predetermined voltage to the A/D terminal of the microcomputer 60. The substitute voltage stop circuit 74 stops output of the detection disabling circuit 73 after a predetermined time from startup or reset of the plasma television set 100.

The detection disabling circuit 73 and substitute voltage stop circuit 74 will be described in detail as follows.

The detection disabling circuit 73 comprises resistances 73a and 73b composing the dividing resistance and a diode 73c preventing reverse flow of current from the detection circuit 72b to the detection disabling circuit 73. The substitute voltage stop circuit 74 comprises resistances 74a and 74b, a diode 74c, an electrolytic capacitor 74d, and a transistor 74e.

The resistance 73a has one of two ends which is connected the 15 V line outside the outside the Vₛᵤₛ generation circuit 52 and the other end connected to one end of the resistance 73b. Output of 15 V is initiated by the 15 V line before startup of the microcomputer 60 or before start of 175V output from the secondary side 72 of the Vₛᵤₛ generation circuit 52 when the plasma television set 100 is powered on.

The resistance 73b has the other end grounded. The resistances 73a and 73b constitute a dividing resistance having a dividing point Y therebetween. The resistances 73a and 73b of the dividing resistance have respective resistance values which are determined so that voltage at the dividing point Y is substantially equal to (slightly higher than) the voltage at the dividing point X. For example, when the voltage at the dividing point X is at about 2.5 V under the condition that the output voltage of the Vₛᵤₛ generation circuit 52, as described above, the resistance values of the dividing resistance preferably range from 2.5 V to 3.5 V or more preferably are at about 3V

The diode 73c has an anode connected to the dividing point Y and a cathode connected to an anode of the diode 72c of the detector circuit 72b. More specifically, when the voltage at the dividing point Y is higher than at the dividing point Y, the voltage at the dividing point Y is supplied via the detection circuit 72 to the A/O terminal of the microcomputer 60.

The resistance 74a has one of two ends to which the P-ON signal is supplied and the other end which is connected to one of two ends of the resistance 74b and a cathode of the diode 74c. The resistances 74b and 74c are connected in parallel to each other. The transistor 74e has a base to which both the other end of the resistance 74b and an anode of the diode 74c are connected. Furthermore, the electrolytic capacitor 74d has a positive electrode connected to the base of the transistor 74e. The electrolytic capacitor 74d has a negative electrode grounded. The transistor 74e is turned on when an interterminal voltage of the electrolytic capacitor 74d exceeds a predetermined value (Vₜₕ). The transistor 74e has a collector connected to the dividing point Y and an emitter grounded.

The P-ON signal supplied to the resistance 74a is indicative of an ON or OFF state of the plasma television set 100. When power is supplied to the plasma television set 100, the P-ON signal is turned to the high (H) level. When the power supply is cut off, the P-ON signal is turned to the low (L) level. More specifically, when the plasma television set 100 is powered on, a predetermined voltage (starting voltage) is applied to the resistance 74a. The electrolytic capacitor 74d is charged with the P-ON signal via the resistances 74a and 74b at a predetermined time constant.
The interterminal voltage of the electrolytic capacitor 74d rises upon power-on of the plasma television set 100. Upon elapse of a predetermined time Tₜₕ, the interterminal voltage rises to the predetermined voltage Vₜₕ that turns on the transistor 74e. Thus, the transistor 74e is turned off until the predetermined time Tₜₕ elapses from power-on of the plasma television set 100, whereupon the detection disabling circuit 73 and substitute voltage stop circuit 74 are electrically cut off. Accordingly, 15V voltage is supplied from the 15V line to the end of the dividing resistance, and the voltage at the dividing point Y is supplied to the detection circuit 72b. The voltage at the dividing point Y is further supplied via the detection circuit 72b to the A/D terminal of the microcomputer 60.

The time constant of the electrolytic capacitor 74d is determined based on a time necessitated for the output voltage of the Vₛᵤₛ generation circuit 52 to rise into a normal voltage range (hereinafter referred to as "startup time"). For example, when the output voltage of the Vₛᵤₛ generation circuit 52 reaches a normal value at time To, the values of the resistances 74a and 74b, a capacitance and charge characteristic of the electrolytic capacitor 74d are selected so that Tₜₕ□T₀.

On the other hand, when the predetermined time Tₜₕ elapses from power-on of the plasma television set 100, the voltage applied to the base of the transistor 74e exceeds the predetermined voltage Vₜₕ, whereupon current flows between the collector and emitter of the transistor 74e. The voltage at the dividing point Y is then drawn to the ground such that the potential at the dividing point Y becomes zero.

The diode 74c is a rectifier diode and accordingly, the P-ON signal is charged in the electrolytic capacitor 74d at a predetermined time constant when the plasma television set 100 has been powered on. When the plasma television set 100 has been powered off, the electrolytic capacitor 74d is quickly discharged so that the transistor 74e is quickly turned off

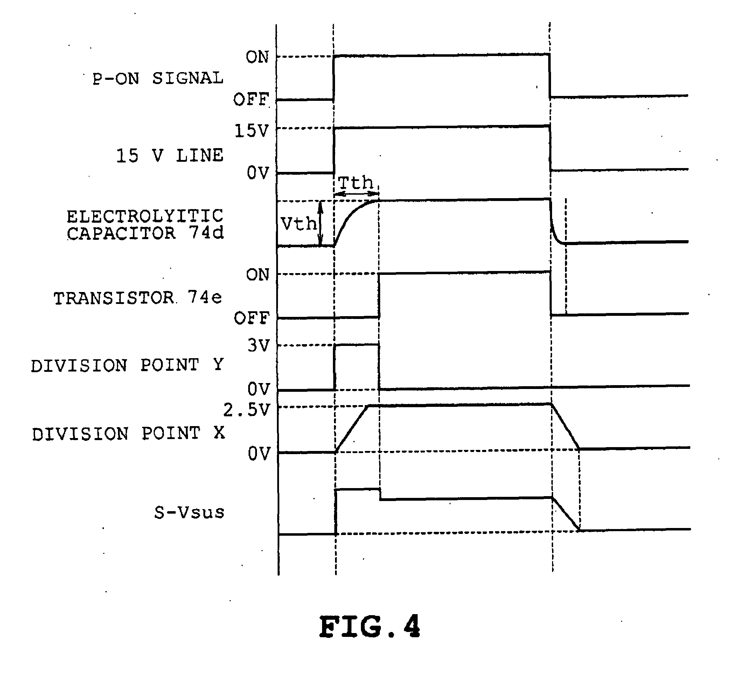

The operation of the whole circuit will now be described with reference to the timing chart of FIG 4. When the plasma television set 100 is powered on, the P-ON signal is supplied to the power supply circuit 50 so that the power supply circuit 50 starts. The relay circuit 55 is then turned on, and the DC voltage DC rectified by the rectifier circuit 51 is supplied to the Vₛᵤₛ generation circuit 52. When voltage is supplied to the Vₛᵤₛ generation circuit 52, the electric charge is supplied to the Vᵢₙ terminal of the control IC 70a, and the startup circuit of the control IC 70a starts to be charged with electric charge. At the same time, the V_{cc} starts oscillation with the stored charge serving as power supply. Upon start of oscillation, the Vₛᵤₛ voltage delivered from the secondary winding 71 c of the transformer 71 gradually rises from 0 V to 175 V.

In this case, the 15V line starts voltage output earlier than the Vₛᵤₛ generation circuit 52 and accordingly continues supplying 15 V to the detection disabling circuit 73 during startup of the Vₛᵤₛ generation circuit 52. In the timing chart of FIG 4, the 15V line rises simultaneously with input of the P-ON signal for the sake of simplicity in the description.
The detection disabling circuit 73 to which voltage is supplied from the 15V line supplies the voltage (about 3 V) at the dividing point Y via the detection circuit 72b to the A/D terminal of the microcomputer 60. Accordingly, the microcomputer 60 obtains the voltage as corresponding to an output voltage of the Vₛᵤₛ generation circuit 52. Based on the obtained voltage, the microcomputer 60 determines that the output voltage of the Vₛᵤₛ generation circuit 52 is normal.

The P-ON signal is also supplied to the substitute voltage stop circuit 74, and the electrolytic capacitor 74d is charged with the voltage of the P-ON signal by the use of a predetermined time constant. Upon elapse of a predetermined time Tₜₕ, the interterminal voltage of the electrolytic capacitor 74d exceeds Vₜₕ, turning on the transistor 74e. When the transistor 74e is turned on, the voltage at the dividing point Y of the detection disabling circuit 73 drops to 0 V

The starting time has already expired when the predetermined time Tₜₕ elapses. Accordingly, the output voltage of the Vₛᵤₛ generation circuit 52 has risen up to a normal output voltage. The voltage at the dividing point X obtained by dividing the output voltage has also risen to about 2.5 V In this case, the output of the detection disabling circuit 73 drops to 0 V in the predetermined time Tₜₕ, and simultaneously, the 2.5V output of the detection circuit 72b is supplied to the A/D terminal of the microcomputer 60. As a result, since the microcomputer 60 determines that the operation of the Vₛᵤₛ generation circuit 52 is normal, the microcomputer 60 does not reset the power supply circuit 50.

Problems to be overcome by the present invention include a problem that the microcomputer starts monitor of power supply before output of the power supply circuit rises to a predetermined value. In order that the problem may be coped with, it is suggested that the detection disabling circuit should deliver a substitute voltage to the microcomputer 60 based on the output voltage of the Vₛᵤₛ generation circuit 52. Such a detection disabling circuit may have an arrangement that, for example, the circuit monitors output of the power supply circuit and supplies substitute voltage indicative of normal output to the microcomputer until the monitored output rises to a predetermined voltage and that the circuit supplies output of a normal monitor circuit to the microcomputer when the monitored output exceeds the predetermined voltage.

However, a discharge characteristic is reduced in the case of a line through which large voltage is delivered as in the invention. When a detection disabling circuit monitors a line having a low discharge characteristic, output of substitute voltage would not start even at the time of occurrence of reset. The voltage of output line is sufficiently high although the voltage at the dividing point X of the detection circuit is not so high after reset. The detection disabling circuit would not operate effectively under the above-described circumstances.

In view of the foregoing problem, the operation of the detection disabling circuit is controlled after input of the P-ON signal starts. When reset occurs and input of the P-ON signal is stopped, the detection disabling circuit and substitute voltage stop circuit are arranged to be returned to respective initial states. Consequently, the detection disabling circuit and substitute voltage stop circuit can be provided both of which can be used with an output line having a low discharge characteristic.

More concretely, when the plasma television set is power off or turned into a standby state, charge of the electrolytic capacitor 74d of the substitute voltage stop circuit 74 is discharged through the diode 74c but not through the resistance 73b. More specifically, the interterminal voltage of the electrolytic capacitor 47d drops by the use of a shorter time constant than at the time of charge to the electrolytic capacitor 47d.

(5) Summary
To summarize the foregoing, when the plasma television set 100 is powered on, the detection disabling circuit 73 generates the substitute voltage of about 3 V from 15V voltage supplied from the 15V line by the use of dividing resistances 73a and 73b, supplying the generated substitute voltage to the A/D terminal of the microcomputer 60. As a result, the voltage monitor by the microcomputer 60 is disabled. On the other hand, the electrolytic capacitor 74d is charged with the P-ON signal by the use of a predetermined time constant. Upon expiration of the predetermined time Tₜₕ, the voltage of the electrolytic capacitor 74d exceeds the threshold Vₜₕ thereby to turn on the transistor 74e so that the voltage at the dividing point Y of the dividing resistances 73a and 73b of the detection disabling circuit 73 is drawn to the ground. As a result, the substitute voltage output of the detection disabling circuit 73 is stopped. Consequently, even when the power supply circuit takes substantial time until oscillation with sufficient voltage starts after supply of power supply voltage, the power supply circuit is prevented from being reset for the reason of power failure until the output voltage rises to or above the predetermined voltage.

The invention should not be limited by the foregoing embodiment. For those of ordinary skill in the art, it goes without saying that mutually replaceable members or arrangements disclosed in the embodiment can be re-combined in different modes, that members or arrangements which are not disclosed in the embodiment but belong to the related art and which are mutually replaceable with the members or arrangements disclosed in the embodiment can suitably be replaced or re-combined in different modes, and that members or arrangements which are not disclosed in the embodiment but which those of ordinary skill in the art can consider as replaceable with the members or arrangements disclosed in the embodiment can suitably be replaced or re-combined in different modes.

Although the invention has been described in considerable detail in language specific to structural features and or method acts, it is to be understood that the invention defined in the appended claims is not necessarily limited to the specific features or acts described. Rather, the specific features and acts are disclosed as preferred forms of implementing the claimed invention. Therefore, while exemplary illustrative embodiments of the invention have been described, numerous variations and alternative embodiments will occur to those skilled in the art.

It should further be noted that throughout the entire disclosure, the labels such as left, right, front, back, top, bottom, forward, reverse, clockwise, counter clockwise, up, down, or other similar terms such as upper, lower, aft, fore, vertical, horizontal, proximal, distal, etc. have been used for convenience purposes only and are not intended to imply any particular fixed direction or orientation. Instead, they are used to reflect relative locations and/or directions/orientations between various portions of an object.

In addition, reference to "first," "second," "third," and etc. members throughout the disclosure (and in particular, claims) is not used to show a serial or numerical limitation but instead is used to distinguish or identify the various members of the group.

## Claims

1. A plasma television set, comprising:
a sustain voltage generation circuit that start oscillation at a primary side of a power supply circuit when a predetermined starting voltage is supplied thereto and necessitates a predetermined time period starting from start of an oscillation until an output voltage at a secondary side of the power supply circuit rises to at least a predetermined voltage, the plasma television set displaying an image on a screen based on an image signal supplied thereto, **characterized in that** the plasma television set further comprises:
a rectifier circuit supplied with an alternating current (AC) voltage and generating a direct current (DC) voltage;
a relay circuit provided at a stage previous to the rectifier circuit and switching between supply and cutoff of the AC voltage to and from the rectifier circuit to turn on and off a main power supply;
an address voltage generation circuit including a first transformer having a primary winding to which the DC voltage is applied and a secondary winding in which an address voltage is generated and supplied to a plasma display panel;
the sustain voltage generation circuit including a second transformer having a primary winding to which the DC voltage is applied and a secondary winding having lines that have different unwinding locations and from which a sustain voltage and a check voltage both having different voltage levels are outputted to the plasma display panel respectively;
a standby voltage generation circuit including a third transformer having a primary winding to which the DC voltage is applied and a secondary winding having lines that have different unwinding locations and from which a first erasing voltage, a second erasing voltage and a scan voltage all having different voltage levels are outputted to the plasma display panel respectively;
a detection circuit having a first dividing resistance having an end to which the check voltage is applied and another end that is grounded, the first dividing resistance having a dividing point;
a microcomputer to which voltage at the dividing point of the first dividing resistance is applied and which determines that the sustain voltage has an anomalous value when the supplied voltage is lower than a predetermined value, thereby switching the relay circuit off;
a detection disabling circuit including a second dividing resistance having one of two ends to which a constant voltage is applied from an outside of the sustain voltage generation circuit and another end that is grounded, the second dividing resistance having a dividing point, and a diode having an anode connected to the dividing point of the second dividing resistance and a cathode connected to the dividing point of the first dividing resistance; and
a substitute voltage stop circuit including a resistance to which the predetermined starting voltage is applied, an electrolytic capacitor having a positive electrode connected to the resistance and a negative electrode grounded, and a transistor having a base connected to the positive electrode of the electrolytic capacitor, an emitter grounded and a collector connected to the dividing point of the second dividing resistance,
the electrolytic capacitor has a time constant determined according to a startup time that output voltage of the sustain voltage generation circuit necessitates to rise to a predetermined normal voltage upon start of supply of the predetermined starting voltage, the electrolytic capacitor having an inter-terminal voltage that exceeds the voltage turning on the transistor upon elapse of the startup time;
the detection disabling circuit supplies voltage at the dividing point of the second dividing resistance instead of voltage at the dividing point of the first dividing resistance until the inter-terminal voltage exceeds the predetermined value upon start of supply of the predetermined starting voltage;
the substitute voltage stop circuit turns on the transistor to ground the dividing point of the second dividing resistance when the inter-terminal voltage exceeded the predetermined value, with the substitute voltage supplied to the detection disabling circuit stopped and the voltage at the dividing point of the first dividing resistance supplied to the microcomputer; and
upon stop of supply of the predetermined starting voltage, the diode is caused to discharge by use of a higher time constant than during charge of the electrolytic capacitor, returning the detection disabling circuit and the substitute voltage stop circuit to respective states prior to start of supply of the predetermined starting voltage.

2. A power supply circuit, comprising:
a primary side of the power supply circuit having an oscillation applied when a predetermined starting voltage is supplied thereto, and necessitates a predetermined time period starting from start of the oscillation until an output voltage at a secondary side of the power supply circuit rises to or above a predetermined voltage, **characterized in that** the power supply circuit further comprises:
a detection unit that detects as to whether an output voltage of the power supply circuit is at least at a predetermined voltage;
a power supply reset unit that resets the power supply circuit when the detection unit detects voltage lower than the predetermined voltage;
a detection disabling circuit that is supplied with a constant voltage from outside of the power supply circuit and generates a substitute voltage from the constant voltage so that the detection unit detects the output voltage higher than the predetermined voltage, outputting to the detection unit the substitute voltage as the output voltage; and
a substitute voltage stop circuit that stops output of the substitute voltage from the detection disabling circuit after at least elapse of the predetermined time period from start of input of the predetermined starting voltage.

3. The power supply circuit according to claim 2, wherein the detection disabling circuit includes a dividing resistance having one of two ends to which the constant voltage is supplied and the other end which is grounded, the dividing resistance having a dividing point, the detection disabling circuit outputting voltage at the dividing point as the substitute voltage via a diode having an anode connected to the dividing point;
the substitute voltage stop circuit includes a resistance having one end to which the predetermined starting voltage is applied, an electrolytic capacitor having a positive electrode connected to the other end of the resistance and a negative electrode grounded, and a transistor having a base connected to the positive electrode of the electrolytic capacitor, an emitter grounded and a collector connected to the dividing point of the dividing resistance;
the electrolytic capacitor has a time constant determined according to a startup time that output voltage of the sustain voltage generation circuit necessitates to rise to a predetermined normal voltage upon start of supply of the predetermined starting voltage; and
the electrolytic capacitor has an interterminal voltage that exceeds a predetermined value upon elapse of the starting time and turns on the transistor so that the dividing point is grounded.

4. The power supply circuit according to claim 3, wherein the substitute voltage stop circuit includes a diode that is connected in parallel to the resistance and includes an anode connected to the electrolytic capacitor side of the resistor, and upon stop of supply of the predetermined starting voltage, the diode is caused to discharge by use of a higher time constant than during charge of the electrolytic capacitor, thereby returning the detection disabling circuit and the substitute voltage stop circuit to respective states prior to start of supply of the predetermined starting voltage.
